# EUROPEAN PATENT APPLICATION

(11) **EP 4 509 249 A2**
(43) Date of publication of application: **19.02.2025**
(21) Application number: 24176871.2
(22) Date of filing: 20.05.2024
(51) Int. Cl.: B22F 10/28, B22F 10/66, B22F 10/68, B22F 10/73, B33Y 40/20, B29C 64/35, B29C 64/153, B29C 64/357, B33Y 10/00, B33Y 40/00

(54) **METHOD FOR THREE-DIMENSIONAL PRINTED POWDER CONTAINMENT**

(30) Priority: 30.05.2023 US 202318325826
(71) Applicant: Spirit AeroSystems, Inc., Wichita, KS 67210 (US)
(72) Inventor: MISAK, Heath, Wichita, 67210 (US); FOULK, Donald, Wichita, 67210 (US); NASSERRAFI, Rahbar, Wichitaus, 67210 (US); TOIVONEN, Paul Ray, Wichita, 67210 (US)
(74) Representative: HGF

(57) **Abstract**

A method of managing additive manufacturing powder used for three-dimensional printing of one or more printed parts, including printing a printed part and a canister covering the printed part on a build plate using a single additive manufacturing process. The method also includes transporting the canister and the printed part, along with the build plate, to a second location. The second location may be outfitted for removal of the canister from the build plate and removal of powder left behind in the canister from the printing of the printed part and the canister. Additional or alternative method steps can include receiving the printed part into a de-powdering machine at the second location, removing the canister from the build plate in the de-powdering machine, and removing powder left behind in the canister from the printing of the printed part and the canister to be recycled for printing another printed part.

## Description

### BACKGROUND

Laser Powder Bed Fusion (LPBF) is an additive manufacturing technology that uses a high-powered laser to melt and fuse metallic powder together, layer by layer, to create three-dimensional (3D) parts from a wide range of materials including aluminum, titanium alloys and nickel-based alloys. After each layer is fused together, a new layer of powder is spread across the surface by a roller and the process is repeated until the part is complete.

Post processing of 3D printed parts using LPBF technology currently involves extensive cleaning of excess powder directly from the machine bed before removing the build plate and printed part from the machine. Once the printing process is complete, the remaining powder that was not fused together must be removed from the machine, which can be a time-consuming process using a vacuum before the build plate and printed parts can be removed. This leads to more exposure to metallic dust to the machine operator and the shop environment. The powder removal process also can be a health and safety concern due to flammability of some metals and the small particle size of the powders becoming dust. It is also undesirable to waste so much extra powder following such printing processes.

Thus, there is a need for an improved three-dimensional printing process that addresses these and other challenges.

### SUMMARY

In one or more embodiments of the invention, a method of managing additive manufacturing powder used for three-dimensional printing of one or more printed parts includes printing at least one printed part and a canister covering the at least one printed part on a build plate using a single additive manufacturing process. Furthermore, this exemplary method includes transporting the canister and the at least one printed part, along with the build plate, to a second location outfitted for removal of the canister from the build plate and removal of powder left behind in the canister from the printing of the at least one printed part and the canister.

Another embodiment of the present invention includes a method of managing additive manufacturing powder used for three-dimensional printing of one or more printed parts. Specifically, this method includes receiving at least one printed part into a de-powdering machine. The at least one printed part, when received in the de-powdering machine, is sealed within a canister covering the at least one printed part on a build plate. The least one printed part and the canister may be printed using a single additive manufacturing process, with the canister and the build plate cooperatively containing powder used for the single additive manufacturing process. This method further includes removing the canister from the build plate and removing the powder from the at least one printed part that was left behind in the canister from the printing of the at least one printed part and the canister. The powder removed during this step may be processed and recycled for forming another printed part.

This summary is intended to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWING FIGURES

Embodiments of the present invention are described in more detail below with reference to the attached drawing figures, wherein:
FIG. 1 is a perspective view of a three-dimensional printed canister formed onto a build plate in accordance with one or more embodiments of the present invention;
FIG. 2 is a fragmentary perspective view of the three-dimensional printed canister and the build plate of FIG. 1, with a portion of the canister removed, revealing the three-dimensional part formed therein, in accordance with embodiments of the present invention;
FIG. 3 is a fragmentary perspective view of the three-dimensional printed canister, build plate, and three-dimensional part of FIG. 2, with only a first half of the canister and three-dimensional part built yet via an additive manufacturing process that prints the canister and the three-dimensional part in unison, in accordance with embodiments of the present invention;
FIG. 4 is an elevation view of the three-dimensional printed canister, the build plate, and the three-dimensional part of FIG. 2, in accordance with embodiments of the present invention;
FIG. 5 is an exploded perspective view of the canister, components of the build plate, and the three-dimensional part of FIG. 2, in accordance with embodiments of the present invention;
FIG. 6 is bottom perspective view of the build plate and its components, in accordance with embodiments of the present invention;
FIG. 7 is a fragmentary, cross-sectional elevation view of the build plate of FIG. 6 taken along line 7-7, in accordance with embodiments of the present invention;
FIG. 8 is a graphic flow chart depicting a method for managing and recycling powder during additive manufacturing, in accordance with embodiments of the present invention; and
FIG. 9 is a flow chart of a method for managing powder during additive manufacturing, in accordance with embodiments of the present invention.

The drawing figures do not limit the present invention to the specific embodiments disclosed and described herein. The drawings are not necessarily to scale, emphasis instead being placed upon clearly illustrating the principles of the invention.

### DETAILED DESCRIPTION

The following detailed description of embodiments of the invention references the accompanying drawings. The embodiments are intended to describe aspects of the invention in sufficient detail to enable those skilled in the art to practice the invention. Other embodiments can be utilized, and changes can be made, without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the present technology can include a variety of combinations and/or integrations of the embodiments described herein.

Traditionally, fabricating 3D printed parts using laser powder bed fusion (LPBF) has a disadvantage of requiring removal of powder used in the 3D printing process. Furthermore, the excess powder used in the LPBF method can get all over a machine doing the 3D printing and/or a room where the machine is located, which can be dangerous and allow the leftover powder to potentially become contaminated.

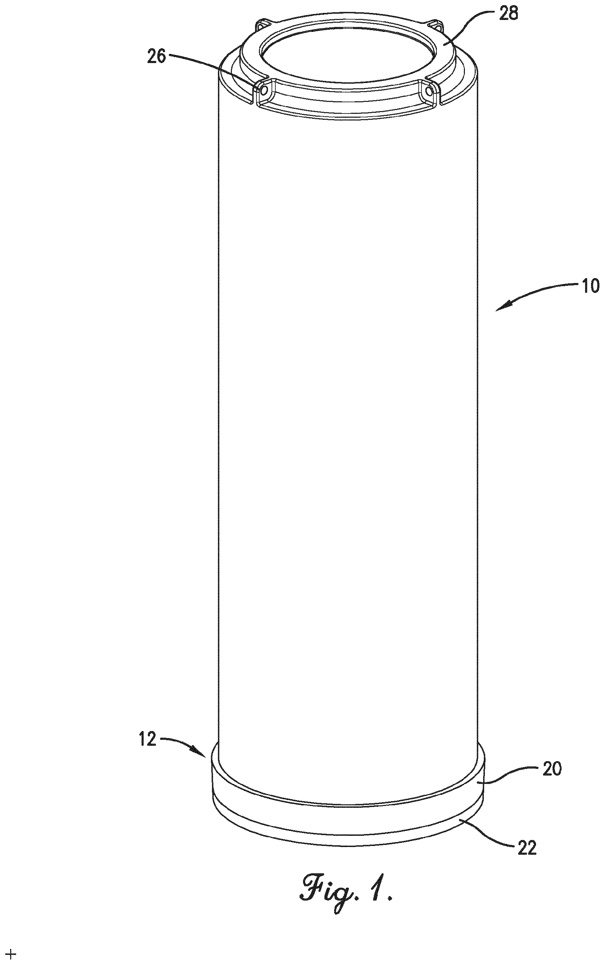

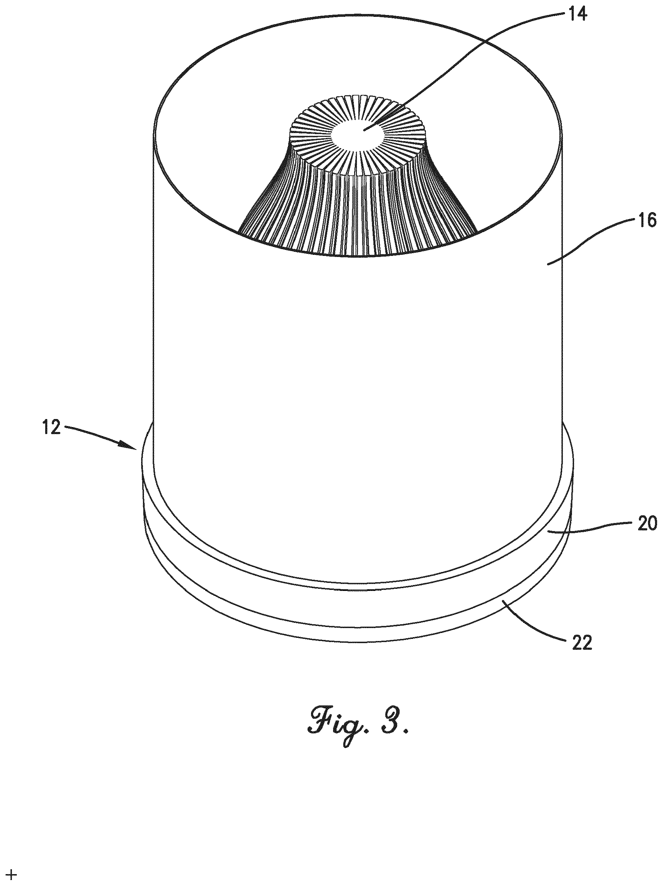

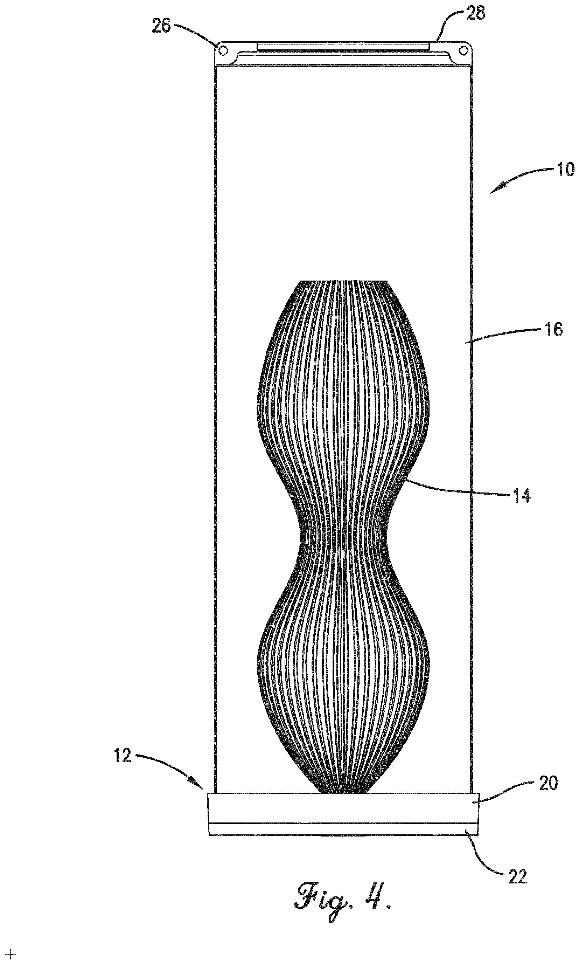

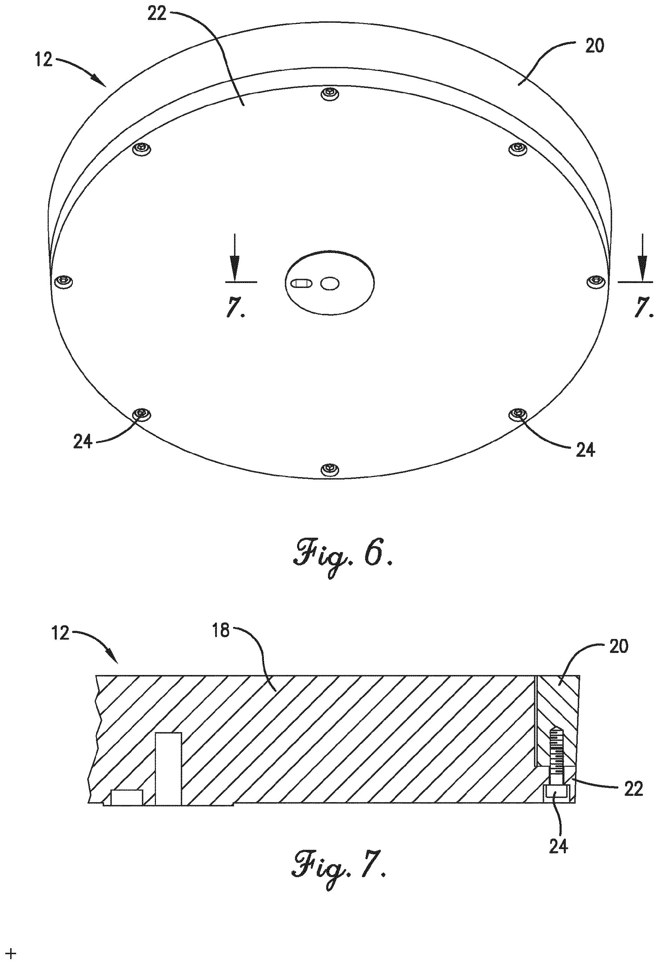

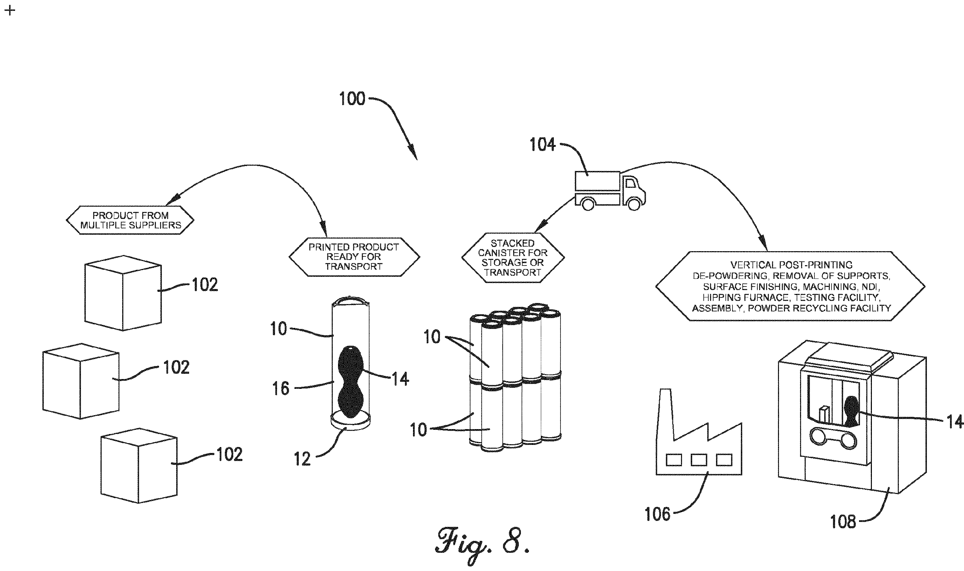

To overcome these deficiencies in the prior art, one or more of the embodiments herein include a system and/or method for managing metallic powder used during 3D printing of one or more printed parts. Specifically, as depicted in FIGS. 1-7, a printed assembly 10 (and/or multiple printed assemblies) is constructed on a build plate 12, with the printed assembly 10 including at least one printed part 14 and a canister 16 surrounding the printed part 14 or parts. That is, the printed part 14 and the canister 16 are 3D printed via additive manufacturing simultaneously, layer by layer, onto the build plate 12 using successive layers of powder (e.g., metallic or metal powder) or other additive manufacturing powders or particles known in the art of additive manufacturing. Specifically, an additive manufacturing machine or 3D printer (such as 3D printers 102 depicted schematically in FIG. 8) uses an additive manufacturing or 3D printing technique such as LPBF. For example, LPBF may use a high-powered laser to melt and fuse powder (e.g., metallic powder) together, layer by layer, to create three-dimensional (3D) parts from a wide range of materials including aluminum, titanium alloys and nickel-based alloys. After each layer is fused together with a preceding layer (or the build plate in the case of a first layer), the most recently fused a new layer of powder is spread across a surface by a roller and the process is repeated until the part is complete.

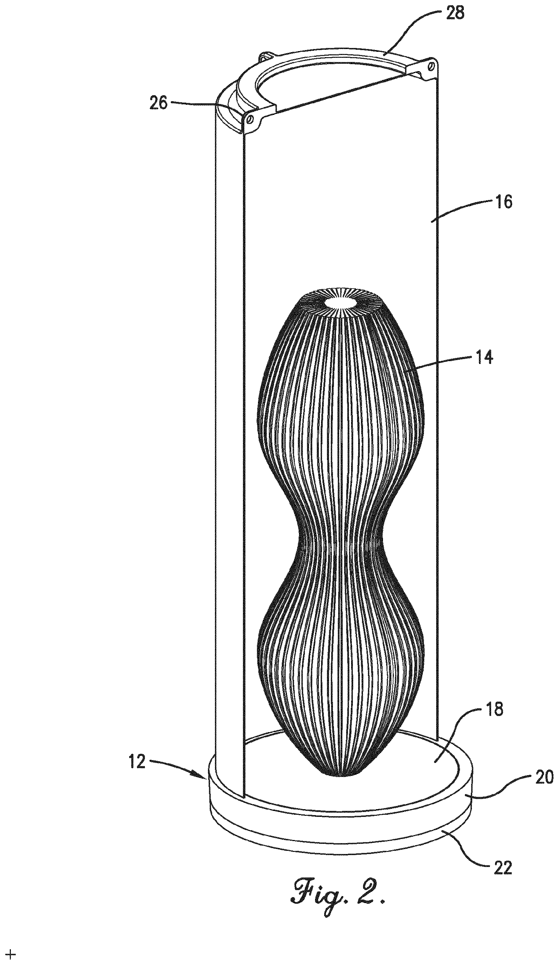

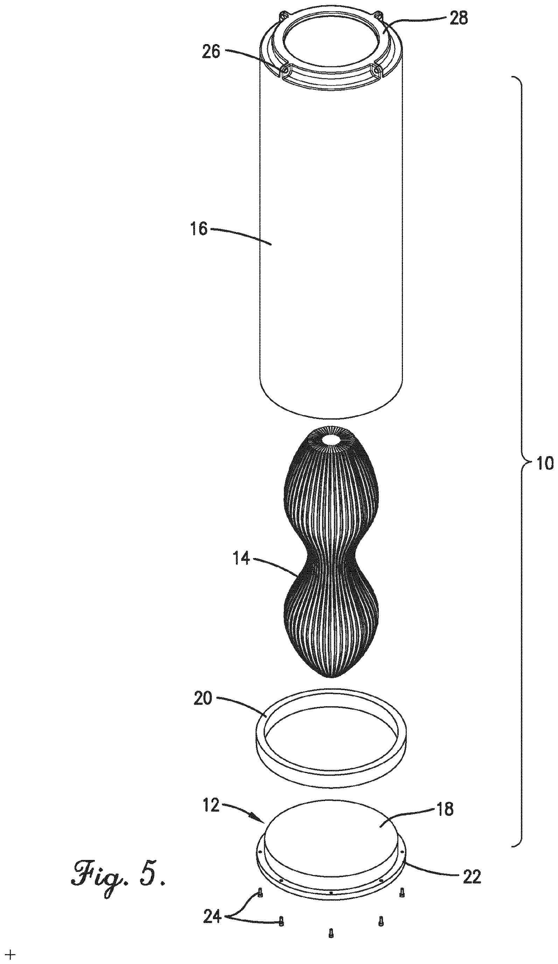

The build plate 12, as depicted in FIGS. 1-7, may be a solid part with a substantially flat surface onto which the printed assembly is built and fused to via the high-powered laser. In some embodiments, the build plate 12 may include a part build section 18 and a canister build section 20 that are mechanically separable from each other, such that the canister 16 may be built on the canister build section 20 and the printed part 14 may be built on the part build section 18. In some embodiments, the build plate 12 has a notch into which or a ledge 22 onto which the canister build section 20 may rest, with the part build section 18 resting inward of the cannister build section 20, as depicted in FIGS. 2 and 5. This allows fasteners 24, as depicted in FIGS. 5-7 to be removed to free the canister build section 20 when it is time to remove the printed part 14 from the canister 16 or to remove the canister 16 (attached to the canister build section 20) from build plate 12 by removing the canister build section 20 from the notch or ledge 22 of the build plate 12 and/or from the part build section 18.

Note that the build plate 12 may be, in some embodiments, part of an LPBF machine (such as 3D printers 102 in FIG. 8). Such LPBF machines may include, for example, a housing, a laser, a table that receives a layer of powder, a vertically-shiftable build platform (e.g., the build plate or a surface upon which the build plate rests), and a sleeve extending below the table. The housing and sleeve cooperatively form a build chamber that receives the printed parts. The build platform and/or the build plate 12 and the printed assembly 10 being built thereon may be advanced downwardly into the sleeve as layers of printed parts are formed in series on the build plate 12. However, other methods for additive manufacturing the printed assembly 10 may be used without departing from the scope of the invention as described herein.

The printed part 14 may be made of aluminum, titanium alloys, nickel-based alloys, and/or any other additive manufacturing materials known in the art. While aspects of the present invention are preferably directed to metal additive manufacturing, it is also within the scope of certain aspects of the present invention for the printed part 14 to include synthetic resin materials. For example, it will be appreciated that one or more parts may be formed via an additive build process (such as a powder bed fusion process) using one or more layers of a polymer material.

The printed part 14 may be any shape or configuration, such as a stacked bulbous configuration as depicted in FIGS. 2, 4, and 5, or any other shape with any other features, indentions, protrusions, openings, angles, and the like. The printed part 14 may be fused to the build plate 12 and/or the part build section 18 thereof and later removed via trimming procedures. In some embodiments, the printed part 14 is one of a plurality of printed parts built substantially simultaneously, layer by layer, along with the canister 16. This may allow for greater efficiency of printing multiple parts in a single multi-layer build additive manufacturing process and containing them for ease of shipping and later removal of powder therefrom at a second location, as described in the methods herein. Furthermore, in some alternative embodiments, the part build section 18 of the build plate 12 may include other subsections (not shown) mechanically attachable and separable from each other, thereby allowing separation of multiple printed parts formed within the same canister away from each other prior to any cutting or trimming of the part from the build plate 12.

The canister 16 is preferably formed to surround and contain the printed part 14 and/or the printed parts and unused powder therein. The canister 16 may be, for example, a cylinder with a cylindrical side wall and a top wall, but with an opening at a bottom thereof, such that the build plate 12 serves as a bottom wall, fully enclosing the printed part 14 and the unused powder therein. However, the canister 16 may have other substantially enclosed shapes and configurations that cooperatively enclose the printed part 14 along with the build plate 12 without departing from the scope of the invention described herein. The canister 16 may further include one or more features for assisting in stacking of the printed assembly 10 and the build plate 12 with a plurality of other printed assemblies and build plates. For example, these one or more features may include protrusions 26 with or without holes formed therethrough for accepting one or more mechanical fasteners therethrough, to fasten one of the canisters with another of the canisters during storage and transport. Furthermore, the one or more features may include a raised feature 28 and/or a depressed feature allowing nesting of one of the build plates with the top wall of one of the canisters.

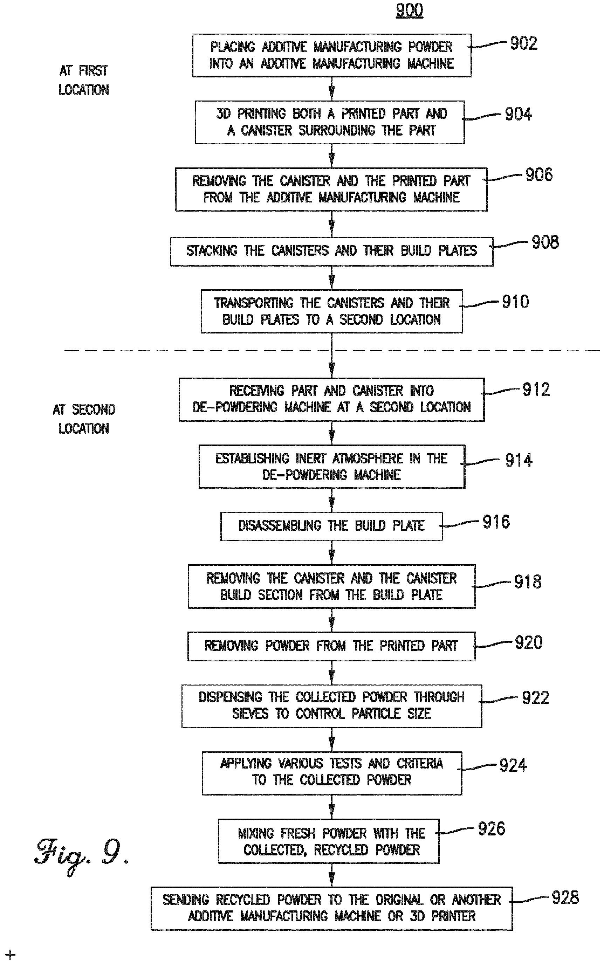

The printed assembly 10 and the build plate 12 may be utilized as part of a system and method graphically depicted in a flow chart in FIG. 8, and method steps in a flow chart of FIG. 9. Specifically, FIG. 8 depicts a system 100 including one or more 3D printers 102 and one or more of printed assemblies (e.g., such as the printed assembly 10 in FIGS. 1-7) on build plates (e.g., such as the build plate 12 in FIGS. 1-7), built in the 3D printers 102. FIG. 8 further shows that the system and methods described herein may involve stacking the printed assemblies and their corresponding build plates with one or more other printed assemblies 10 and their corresponding build plates 12, which may then be transported (via ground vehicle 104 or any vehicle known in the art) to a second location 106 (such as another factory, plant or other location or room within a building where the printed part was formed). This second location 106 may include, for example, one or more de-powdering machines 108 or the like for removal of powder used in the additive manufacturing process from the printed assemblies 10 and/or the canister 12. The second location 106 and/or the de-powdering machines 108 may be further configured for removal of supports, surface finishing the printed parts, machining of the printed parts, performing non-destructive inspections (NDI), processing in a hipping furnace, running further analysis at a testing facility at the second location or yet another location, assembly of one or more of the printed parts, and recycling / repackaging / repurposing used powder to be returned to one or more of the 3D printers 102 to form additional parts.

The methods described herein include 3D printed parts using LPBF and is suitable for reducing the amount of time spent cleaning powder at an LPBF 3D printer or the like by containing the powder inside a printed canister that is printed simultaneously with the 3D-printed part and is fused to a build plate. The method may further include a certified powder removal process aimed toward consolidating the post-processing of the 3D printed part. The method may increase machine run time while reducing the exposure to powder (e.g., metallic powder) to employees by containing the unused powder inside a 3D printed enclosure or canister surrounding the entire build plate of the machine.

Utilizing the method disclosed herein, most of the post-processing may be done in a designated area (e.g., the second location 106 and/or the de-powdering machines 108) for powder clean up and the removal of printed parts from the build plate. Specifically, in one or more embodiments, the canister may surround the part and unused powder, allowing the build plate and the printed part to be transported to a designated powder removal machine or area for post-processing while preventing the powder (e.g., metal or metallic powder) from oxidizing. The canister, the build plate, and the powder and printed part therebetween can be transported to the second location, such as a designated powder removal area. In one or more embodiments, an inert environment can be established (if needed) at the second location. Furthermore, the canister may be sheared or build plate fasteners (e.g., the fasteners 24) can be removed, allowing the canister 16 and the canister build section 20 to be removed, following which the powder (not shown) may be removed from the canister 16 and the printed part 14. Thus, the methods described herein also advantageously support controlled powder re-use methodologies by maintaining inert atmosphere and preventing oxidation of leftover powder stored in the canister, creating a better controlled process for reuse of that leftover powder.

The flow chart of FIG. 9 depicts in more detail the steps of an exemplary method 900 for managing additive manufacturing powder used during and following three-dimensional printing of one or more printed parts. In some embodiments of the invention, various steps may be omitted and/or steps may occur out of the order depicted in FIG. 9 without departing from the scope of the invention. For example, two blocks shown in succession in FIG. 9 may in fact be executed substantially concurrently, or blocks may sometimes be executed in the reverse order depending upon the functionality involved.

The method 900 may include a step of placing additive manufacturing powder into an additive manufacturing machine, such as the 3D printers 102, as depicted in block 902, and printing both a printed part (e.g., a 3D part) and a canister surrounding the part (e.g., the canister 16 surrounding the part 14 or a plurality of such parts), as depicted in block 904. This printing may include using a high-powered laser to melt and fuse powder (e.g., metallic powder) together, layer by layer, to create 3D parts from an additive manufacturing powder made of any of the materials described herein. After each layer is fused together, a new layer of powder is spread across the surface by a roller and the process is repeated until the part is complete. Additional powder may be added to the additive manufacturing machine or 3D printers 102 as needed.

Note that in addition to building the canister 16 and the printed part 14, this method may also simultaneously include building witness coupons (not shown) imbedded into / integrally formed with the canister 16 at various pre-determined layers. These witness coupons may be configured for testing the part in a non-destructive manner by merely using the witness coupons, which are easy to find due to their attachment to the canister. In some embodiments, everything needed for certifying the printed part 14 may be provided on such witness coupons for certifying that printed part 14, and because it is formed within the canister, it advantageously cannot be removed or altered in any way before the canister 16 with the printed part 14 therein gets to the second location 106 for further processing and removal of the powder as described herein. The coupon may be labeled during the 3D print with identifying information, desired testing specifications, or the like. In some embodiments, the coupons may also have printed thereon removal methods or other important information for users or operators at the second location. Such methods and information may include, for example, a round blade's size (e.g., the size of an interior of the canister) to be used when removing portions of the build plate 12 or other parts thereof. Additionally or alternatively, the methods and information may include instructions to notch and bang the canister with a hammer, perform EDIM removal during rotation, and finally using a bandsaw to remove the canister 16.

Next, the method 900 may include a step of removing the canister 16 and the printed part 14 from the additive manufacturing machine, as depicted in block 906. In some embodiments, this removal step is preferably performed while the canister 16 and the printed part 14 are still hot, without providing much if any cool down time. Steps 902-906 may be repeated any number of times to create any number of canisters and parts. Then the method 900 may include stacking the canisters and their corresponding build plates next to and/or on top of each other, as depicted in block 908 and in FIG. 8, and then transporting the canisters, printed parts, and their build plates from a first location with the additive manufacturing machine to a second location, as depicted in block 910 and in FIG. 8. However, note that the stacking step may be removed without departing from the scope of the invention and/or the canisters and their corresponding parts and build plates may be shipped individually.

The second location may be outfitted for removal of the canister 16 from the build plate 12 and for removal of powder left behind in the canister 16 during the printing of the printed part 14 and the canister 16. At the second location 106, the method 900 may include receiving and/or loading the canister 16 into the de-powdering machine 108, as depicted in block 912, and establishing inert atmosphere therein, as depicted in block 914. This assists in preventing the powder from oxidizing once the canister 16 is opened within the de-powdering machine 108.

The method 900 may further comprise disassembling the build plate 12, as depicted in block 916, removing the canister and the canister build section 20 from the build plate 12, as depicted in block 918, and removing powder from the printed part 14, as depicted in block 920. The removing of the canister 16 may be performed by removing the fasteners 24, and then separating the parts that were being held together by those fasteners. The removing of the powder may be performed by rotating and vibrating the printed part 14, and/or using hand powder removal techniques through a glove box, blowing inert gas, wiping the powder off with hand tools, and/or suctioning the powder via vacuum. For example, the bottom of the de-powdering machine 108 and/or a bottom chamber thereof may be vacuumed. Note that the removal of the powder may also, in some case remove supports printed to hold the printed part 14 in a desired shape during transport to the second location.

All of the powder collected via vacuum and other techniques within the de-powdering machine 108 may then be processed. For example, the method 900 may include dispensing the collected powder through sieves or the like, as depicted in block 922, to control particle size. Furthermore, the method 900 may include applying various tests and criteria to the collected powder, as depicted in block 924, before and/or after dispensing it through the sieves. For example, the collected powder may be evaluated based on pass/fail criteria set in order for that powder to be used again / recycled for a particular use. Furthermore, chemistry testing for oxygen may be used to validate the chemistry of the powder for a particular use or reuse for the same additive manufacturing process.

The method may also include a step of mixing fresh powder with the collected, recycled powder, as depicted in step 926. Samples of this mixed powder may have samples thereof tested and such information documented, thereby certifying the mixed powder for one or more particular uses. However, in one or more alternative embodiments, only the recycled powder may be used for building another part, with step 1026 omitted. The method 900 may further include sending the mixed and/or recycled powder to the original or another 3D printer or additive manufacturing machine, as depicted in step 928. Specifically, the mixed and/or recycled powder may be placed into a container and sent to another 3D printer and/or the original 3D printer for being made into yet another part, via steps 902 - 906. In some embodiment, the container for sending the recycled powder may have printed thereon and/or contained therein information from the witness coupon and various tests described herein for verification purposes.

Although the invention has been described with reference to example embodiments illustrated in the attached drawing figures, it is noted that equivalents may be employed, and substitutions made herein, without departing from the scope of the invention as described and claimed herein. It is also within the ambit of certain aspects of the present invention for one or more printed parts or the canister to be formed by an alternative additive process or using a combination of powder bed fusion process and another additive process. Suitable alternative processes may include, among other things, electrochemical deposition, binder jetting, kinetic fusion, material extrusion (such as with friction stirring or Joule heating), liquid metal jetting, solid state sheet lamination, and direct energy deposition (DED) processes.

Having thus described one or more embodiments of the invention, what is claimed as new and desired to be protected by Letters Patent includes the following:

## Claims

1. A method of managing additive manufacturing powder used for three-dimensional printing of one or more printed parts, the method comprising:
printing at least one printed part and a canister covering the at least one printed part on a build plate using a single additive manufacturing process; and
transporting the canister and the at least one printed part, along with the build plate, to a second location outfitted for removal of the canister from the build plate and removal of powder left behind in the canister from the printing of the at least one printed part and the canister.

2. The method of claim 1, wherein the printing step is performed with the powder being melted and fused by a laser, layer by layer, to create the at least one printed part and the canister in the single additive manufacturing process.

3. The method of claim 2, wherein the powder is made of at least one of aluminum, titanium alloys, nickel-based alloys, synthetic resin, and polymer material.

4. The method of claim 1, receiving recycled powder from the second location that was removed from the canister, and printing another printed part using the recycled powder.

5. The method of claim 1, wherein the canister has one or more walls that enclose the at least one printed part within the canister, wherein the canister has a top wall with features configured for engaging other canisters or build plates for transport to the second location.

6. The method of claim 1, wherein the printing using the single additive manufacturing process includes printing witness coupons integrally with the canister at pre-determined layers of the canister, wherein the witness coupons are configured for testing the one or more printed parts in a non-destructive manner.

7. A method of managing additive manufacturing powder used for three-dimensional printing of one or more printed parts, the method comprising:
receiving at least one printed part into a de-powdering machine, wherein the at least one printed part is sealed within a canister covering the at least one printed part on a build plate, wherein the at least one printed part and the canister were printed using a single additive manufacturing process, wherein the canister and the build plate cooperatively contain powder used for the single additive manufacturing process;
removing the canister from the build plate; and
removing the powder from the at least one printed part that was left behind in the canister from the printing of the at least one printed part and the canister.

8. The method of claim 7, wherein the single additive manufacturing process is laser powder bed fusion (LPBF); and/or wherein the powder is made of at least one of aluminum, titanium alloys, nickel-based alloys, synthetic resin, and polymer material.

9. The method of claim 7 or 8, further comprising establishing inert atmosphere in the de-powdering machine prior to removing the canister from the build plate.

10. The method of any one of claims 7 to 9, further comprising dispensing powder removed from the canister through sieves.

11. The method of any one of claims 7 to 10, sending recycled powder that was removed from the canister to an additive manufacturing machine or three-dimensional printer for printing another printed part using the recycled powder; and optionally
further comprising mixing fresh powder with powder that was removed from the canister to form the recycled powder.

12. A method of managing additive manufacturing powder used for three-dimensional printing of one or more printed parts, the method comprising:
printing at least one printed part and a canister covering the at least one printed part on a build plate using a single additive manufacturing process; and
transporting the canister and the at least one printed part, along with the build plate, to a second location outfitted for removal of the canister from the build plate and removal of powder left behind in the canister from the printing of the at least one printed part and the canister;
receiving the at least one printed part into a de-powdering machine at the second location;
removing the canister from the build plate in the de-powdering machine; and
removing powder from the at least one printed part that was left behind in the canister from the printing of the at least one printed part and the canister, wherein such removed powder is recycled for printing another printed part.

13. The method of any one of claims 7 to 12, wherein the step of removing the canister from the build plate comprises disassembling the build plate by removing the fasteners and separating the canister build section from the part build section.

14. The method of any preceding claim, wherein the base plate is comprised of a part build section and a canister build section that are mechanically joined by a fastener and mechanically separable by removal of the fastener.

15. The method of claim 14, wherein the canister is printed onto the canister build section and the at least one printed part is printed onto the part build section.
